# EUROPEAN PATENT APPLICATION

(11) **EP 1 718 031 A1**
(43) Date of publication of application: **02.11.2006**
(21) Application number: 05290912.4
(22) Date of filing: 25.04.2005
(51) Int. Cl.: H04L 29/12, H04L 29/06

(54) **Method of resolving a session initiation protocol uniform resource identifier**

(71) Applicant: ALCATEL, 75008 Paris (FR)
(72) Inventor: Lemke, Andreas, Dr., 70195 Stuttgart (DE); Thiebaut, Laurent, 92160 Antony (FR)
(74) Representative: Zinsinger, Norbert

(57) **Abstract**

The invention concerns a method of resolving a Session Initiation Protocol Uniform Resource Identifier (= SIP URI), and a SIP server, a terminal with a SIP User Agent (= UA) functionality, and a dynamic delegation discovery server (= DDDS) for executing this method. A SIP request addressed to an initial SIP URI is received at the SIP server or the SIP UA. This triggers the invocation of the DDDS to resolve the initial SIP URI. A NAPTR resource record of the DDDS associated with the initial SIP URI is retrieved and the rules of said NAPTR resource record are applied to the initial SIP URI. Thereby, a ported SIP URI to be put instead of the initial SIP URI of the SIP request is obtained. Finally, the initial SIP URI of the SIP request is substituted by the ported SIP URI.

## Description

The invention relates to a method of resolving a Session Initiation Protocol (= SIP) Uniform Resource Identifier (= URI), a SIP server, a terminal, and a dynamic delegation discovery server for executing this method.

As soon as a SIP UA is activated in an IP network, an IP address, such as 100.101.102.103, is assigned to the SIP UA (UA = User Agent; IP = Internet Protocol). Although IP addresses, are technically indispensable for the routing within an IP network, such as the public Internet, a user may want to be reachable via a SIP URI, such as sip:user@domain.com, because these user-friendly textual addresses are permanent, i.e., do not change when the terminal re-boots, and easy to remember. The syntactic structure of a SIP URI corresponds to the structure of an e-mail address. "user" represents an individual user name, "domain.com" corresponds to a domain name.

A SIP URI, assigned to the user by a service provider, represents within an IP network the way for other users to address a SIP UA, such as a VoIP softphone or a VoIP hardphone. The addressing of a user via the SIP URI may pose problems if the context of the user changes, as in the following two examples.

First, a user initially obtains a SIP URI, e.g., sip:user@provider1.com, from one provider. The user then changes providers, i.e., all calls to sip:user@provider1.com shall be routed to sip:user@provider2.com.

Second, a user may wish to have personalised SIP URIs, such as sip:firstname@lastname.eu or sip:user@company.com. The user wishes to have this personal URI redirected to a URI obtained from his current service provider, e.g., user@provider3.com.

One way of handling the mapping of SIP URIs is to look up a proprietary database allowing to translate a SIP URI into another one. Another solution is to set up a SIP redirect server that has access to a database with mappings of one SIP URI into another. Incoming requests addressed to the original SIP URI of the SIP UA are redirected to and answered by a SIP redirect server looking up the new SIP URIs of the SIP UA corresponding to the original SIP URI in a location database and directing a requesting client to contact the corresponding new URI. Thus, the SIP UA can be reached via the original SIP URI independent of the new URI issued by the currently used service provider.

The first solution is of limited use as it represents a proprietary solution. The second solution requires a SIP redirect server. Using SIP to accomplish the URI lookup is more complex than using other protocols. In addition, the SIP proxy server requesting the SIP redirect server may not know in advance of sending a SIP (e.g. INVITE) request whether the targeted SIP server in fact is a redirect server or another type of SIP server. In the latter case, additional measures must be taken to assure the security of the communication and the ability to charge appropriately for the communications service.

It is the object of the present invention to improve the resolution of a SIP URI.

The object of the present invention is achieved by a method of resolving a SIP URI by invoking a SIP server or a SIP UA of a telecommunication network, the method comprising the steps of receiving at the SIP server or the SIP UA a SIP request addressed to an initial SIP URI, i.e., an original SIP URI; invoking a Dynamic Delegation Discovery System (= DDDS) to resolve the initial SIP URI; executing a DDDS application defined for the initial SIP URI; retrieving a Naming Authority Pointer (= NAPTR) resource record of the DDDS associated with the initial SIP URI; applying rules of said NAPTR resource record to the initial SIP URI and obtaining a ported SIP URI, i.e., a new SIP URI, to be put instead of the initial SIP URI of the SIP request; and substituting the initial SIP URI of the SIP request by the new SIP URI. The object of the present invention is further achieved by a SIP server, whereby the SIP server comprises a control unit adapted for receiving a SIP request addressed to an initial SIP URI, i.e., an original SIP URI; invoking a DDDS to resolve the initial SIP URI; retrieving a NAPTR resource record of the DDDS associated with the initial SIP URI; applying rules of said NAPTR resource record to the initial SIP URI and obtaining a ported SIP URI, i.e., a new SIP URI, to be put instead of the initial SIP URI of the SIP request; and substituting the initial SIP URI of the SIP request by the ported SIP URI. Furthermore, the object of the present invention is achieved by a terminal providing a SIP UA functionality, whereby the terminal comprises a control unit adapted for receiving a SIP request addressed to an initial SIP URI; invoking a DDDS to resolve the initial SIP URI; retrieving a NAPTR resource record of the DDDS associated with the initial SIP URI; applying rules of said NAPTR resource record to the initial SIP URI and obtaining a ported SIP URI to be put instead of the initial SIP URI of the SIP request; and substituting the initial SIP URI of the SIP request by the ported SIP URI. And the object of the present invention is achieved by a DDDS, whereby the DDDS comprises a control unit adapted for receiving an invocation to resolve an initial SIP URI; executing a DDDS application defined for the initial SIP URI; retrieving a NAPTR resource record of the DDDS associated with the initial SIP URI; applying rules of said NAPTR resource record to the initial SIP URI and obtaining a ported SIP URI to be put instead of the initial SIP URI of the SIP request; and substituting the initial SIP URI of the SIP request by the ported SIP URI.

The invention provides portability of a SIP URI from one provider to another. A user initially obtains a SIP URI from his provider. When the user wishes to change the provider, incoming calls to the initial SIP URI will be routed to the current SIP URI.

The invention also provides portability of a SIP URI from a personalised SIP URI to a service provider SIP URI. A user may have a personalised SIP URI. Then the communication assigned to this personalised SIP URI is redirected to a SIP URI obtained from the user's current service provider.

The invention provides a not-proprietary solution. It uses an open data-base which is world wide or at least (pan-)operator wide, if some operators such as mobile operators of the GSMA want to define a global but private DNS hierarchy data base (GSMA = Global System for Mobile Communication Association). The method according to the invention is more efficient than using a SIP redirect server. Furthermore, the DDDS regular expression substitution rules provide a great deal of flexibility for defining translation rules.

Apart from the SIP URI scheme, the invention also applies to the "pres:" Presence URI scheme as described in RFC 3860 and the security standard "sips:".

One advantage of the invention is the fact that it does not require any additional servers and devices. It is possible that already existing mechanisms of the SIP architecture such as the U2U function or elements of these mechanisms can be re-used for the mapping of a SIP URI to another SIP URI without much effort. On the server side no or not a significant change is needed, except populating the data on the DNS server. Only some changes on the client side are required.

Further advantages are achieved by the embodiments of the invention indicated by the dependent claims.

According to a preferred embodiment of the invention, a SIP request is first sent to a SIP server, in particular to a SIP proxy server, or a SIP UA is triggered to send a SIP request to a UAS. In case the SIP server or the SIP UA are not able to resolve the SIP UA, this may be an indication that the SIP URI has been ported. Then the DDDS is invoked for resolving said SIP URI.

The SIP server mentioned in this invention may be any kind of SIP server. Examples of such SIP servers are servers supporting CSCF (Call-Session-Control-Function) or Application Server functions such as defined by 3gpp IMS, 3gpp2 MMD or TISPAN IMS architecture.

It is possible that a user of a SIP service has changed his service provider and, correspondingly, his SIP URI. Then the user wishes that all calls addressed to the original SIP URI are routed to the new SIP URI. Then the invention provides a method to generate a ported SIP URI by applying NAPTR rules to the original SIP URI. The ported SIP URI is equivalent to the new SIP URI.

It is further possible that the original SIP URI is a personal SIP URI. Then the user wishes that all calls addressed to the personal SIP URI are routed to the SIP URI issued to him by his service provider if the service provider is unable to issue the desired personal SIP URI. Then the invention provides a method to generate a ported SIP URI by applying NAPTR rules to the personal SIP URI. The ported SIP URI is equivalent to the non-personal SIP URI.

According to a preferred embodiment of the invention, a tag is added to a SIP URI after the DDDS has been invoked for resolving the initial SIP URI. Said tag indicates to other elements of the telecommunication network, such as SIP proxy servers and application servers down the signalling path, that the SIP URI of the SIP request has been porting-tested. Thus, it is avoided that another SIP proxy server again invokes the DDDS NAPTR rules by sending a NAPTR DNS request. Through the tag, every network element down the signalling path is informed that the check for portability has been carried out and that no other network element has to be concerned about the correctness of the SIP URI of the SIP request. Thus, unnecessary and redundant checks are avoided.

It is also possible that the user or the UAS knows for sure that the SIP URI is correct. Then they may indicate this fact to the network elements down the signalling path by adding a tag to the SIP request. Through the tag, every network element down the signalling path is informed that no check for portability is needed and that no other network element has to be concerned about the correctness of the SIP URI of the SIP request. Thus, unnecessary and redundant checks are avoided.

The NAPTR rules may be retrieved from the DDDS and applied at the SIP server or the SIP UA. But it is also possible that the DDDS itself applies the NAPTR rules to the initial SIP URI, obtains a ported SIP URI, and substitutes the initial SIP URI of the SIP request with the ported, i.e., the new SIP URI.

In any case, some advantages are achieved when the database that is accessed by the DDDS is regularly updated. Then the mapping of a SIP URI to a current SIP URI is likely to be successful. The database has to be filled with the information about the changes of service providers and the redirection information associated with personalised SIP URIs of users. Thus it will be particularly important that this information is updated on a regular basis, preferably with a short temporal period. The database may be updated by service providers issuing SIP URIs to SIP subscribers.

These as well as further features and advantages of the invention will be better appreciated by reading the following detailed description of presently preferred exemplary embodiments taken in conjunction with accompanying drawings of which:
- Fig. 1: is a block diagram of a system for providing a PTT service according to a first embodiment of the invention.
- Fig. 2: is an operational step diagram according to a first embodiment of the invention.
- Fig. 3: is an operational step diagram according to another embodiment of the invention.

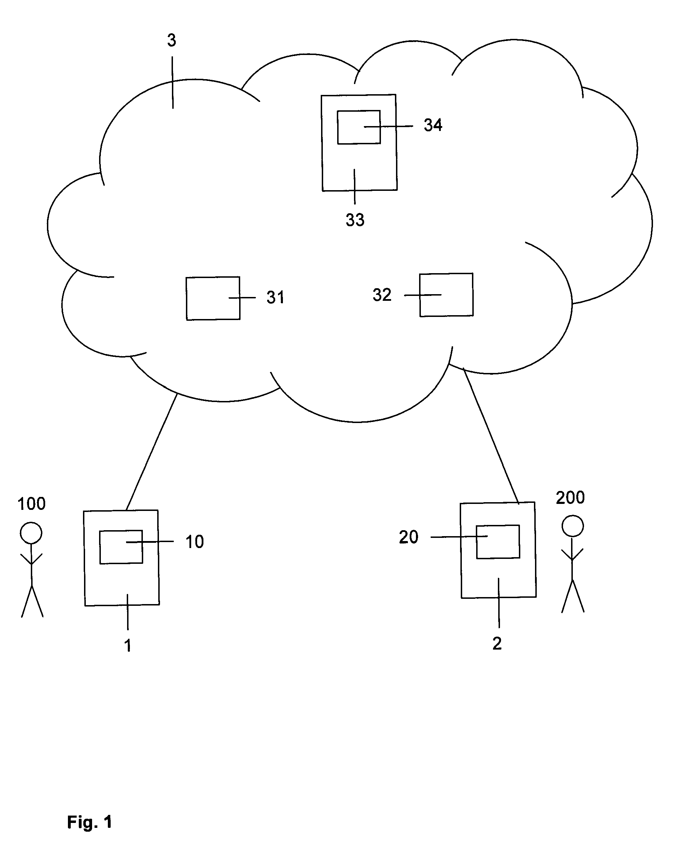

Fig. 1 shows a packet-switched network 3 which may be the public Internet or another packet-switched communication network based on an IP protocol. The packet-switched network 3 provides functionalities to support VolP communication sessions between communication partners using the SIP protocol (SIP = Session Initiation Protocol). The packet-switched network 3 is maintained by one or more service providers; it may be composed of various physical sub-networks like, e.g., Ethernet, ATM networks and wireless access networks (e.g., WLAN) interlinked via a common level three IP communication layer (ATM = Asynchronous Transfer Mode; WLAN = Wireless Local Area Network).

A first telecommunication terminal 1 assigned to a calling party 100 and a second telecommunication terminal 2 assigned to a called party 200 are connected to the packet-switched network 3 and can be used to initiate and receive telecommunication calls via the packet-switched network 3. For example, the telecommunication terminals 1 and 2 are VoIP hardphones, such as a VoIP telephone set or VoIP softphones, e.g., a PC, equipped with microphone, speakers, and a sound card, operating as softphone due to dedicated VolP telephony software.

It is also possible that the telecommunication terminals 1 and 2 comprise a standard analogue telephone and an adapter. The telephone is connected to an ATA adapter which, in turn, must be connected via an Ethernet cable to a highspeed IP network connection such as DSL to the network 3 (ATA = Analog Telephone Adaptor). The ATA converts analogue voice into digitised voice signals and then into a RTP/IP data packet stream (RTP = Real Time Transport Protocol). The data packets are then transmitted via the DSL connection to a router of the IP network.

Within the context of an IP network using the peer-to-peer SIP protocol, the peers in a session are called user agents. More specifically, the client application 10 running on the telecommunication terminal 1 of the calling user 100 and initiating the SIP session is called User Agent Client (= UAC); the server application 20 running on the telecommunication terminal 2 of the called user 200 is called User Agent Server (= UAS). The UAS 20 of the telecommunication terminal 2 contacts the called user 200 when a SIP request is received and returns a response on behalf of the called user 200.

The packet-switched network 3 comprises SIP proxy servers 31, 32 and a DNS server 33 (DNS = domain name system). As every common SIP network, the packet-switched network 3 may also comprise a SIP redirect server and a SIP registrar server with a location service which are not shown in Fig. 1.

Optionally, the packet switched network 3 may be empty, i.e., not contain any SIP entities used by the telecommunication terminals 1 and 2. In this case, telecommunication terminals 1 and 2 communicate directly and telecommunication terminal 1 must carry out the translation of the original SIP URI into the new SIP URI.

A SIP proxy server, or simply "proxy", is an intermediary network entity that acts as both a server and a client for the purpose of making requests on behalf of other clients. A proxy server primarily plays the role of routing, which means its job is to ensure that request is sent to another entity "closer" to the targeted user. More specifically, the SIP proxy servers 31, 32 are elements of the IP network 3 that route SIP requests from the UAC 10 to the UAS 20 and SIP responses from the UAS 20 to the UAC 10. A SIP request may traverse one or more proxies 31, 32 on its way to the UAS 20. Each traversed proxy 31, 32 will make routing decisions, modifying the SIP request before forwarding it to the next element. Responses will typically also route through the IP network 3, again by traversing one or more proxies 31, 32 on its way to the UAC 10.

The DNS server 33 is an Internet server that translates domain names into IP addresses. The DNS server 33 comprises a Dynamic Delegation Discovery System (= DDDS) 34 such as described in the RFC documents 3401 to 3405. The DNS server 33 is used as a data store for the rules that allow the DDDS application to function, i.e., mapping some unique string to data stored within the DNS server 33 by iteratively applying string transformation rules until a terminal condition is reached. The transformation rules are filed as NAPTR (= Naming Authority Pointer) Resource Records (= RR) in the DNS server 33. These abilities of the DDDS 34 may also be used to map a telephone number to service endpoints such as SIP, i.e., to map E.164 telephone numbers to SIP URIs. The DNS server 33 may be represented by one or more of a plurality of servers, which are organised in a parallel or hierarchical manner.

The packet-switched network 3 may be interconnected to other packet-switched networks or circuit-switched networks, preferably with the help of a mediating device like, e.g., a gateway.

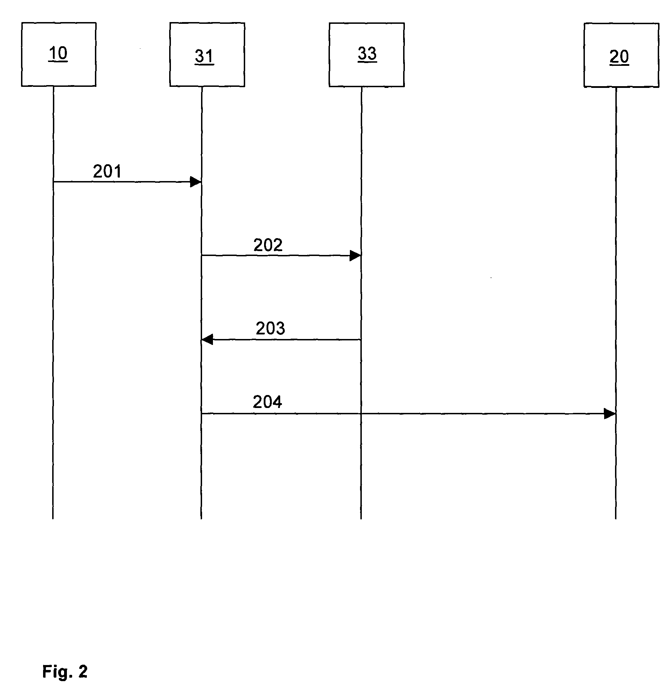

Figure 2 shows operational steps, which are carried out to provide a communication service according to a first embodiment of the invention described in Fig. 1. Fig. 2 shows the UAC 10, the UAS 20, a SIP server 31, and a DNS server 33 in accordance with the embodiment described in Fig. 1. The SIP server 31 represents an exemplary network node of the telecommunication network 3 where the call is processed and routed. It is also possible that another network node 32 of the telecommunication network 3 receives and processes an incoming call.

The calling party 100 who uses the first telecommunication terminal 1 wishes to call and communicate with the called party 200 who uses the second telecommunication terminal 2.

For example, let us assume that the called party 200 with first name "Alistair" and last name "Urie" initially obtained the personalised SIP URI "sip:alistair@urie.fr" from his then SIP service provider. The called party 200 wishes to have this personal SIP URI redirected to a SIP URI obtained from his current service provider, viz., "provider1.com". That means that all calls directed to "sip:alistair@urie.fr" should be routed to "sip:alistair.urie@provider1.com".

The calling party 100 triggers the UAC 10 of the telecommunication terminal 1 to set off a SIP request, i.e., the UAC 10 sends a SIP request 201 targeted at the initial SIP URI "sip:alistair@urie.fr" to the proxy server 31.

The proxy server 31, before routing this request, checks whether the number has been ported, i.e., whether the domain part of this SIP URI actually corresponds to the service provider actually delivering SIP or presence service for this target. The proxy server 31 may be adapted to check all incoming requests for portability (all-call-query).

It is also possible that the proxy server 31 first tries to route the SIP request 201 targeted at the intial SIP URI "sip:alistair@urie.fr". Then it may occur that the routing attempt fails on account of the outdated SIP URI. The proxy server 31 may receive error messages like 404 Not Found or 410 Gone responses. These error messages may serve as triggers to check whether the SIP URI has been ported. If the proxy server 31 only checks requests for portability in case of a routing failure, this approach is called query-on-release.

To do said check, first a DDDS application is defined that extracts the domain part from a SIP URI according to the rules of RFC 3261. Applied to the initial SIP URI "sip:alistair@urie.fr", this application extracts the host name "urie.fr". The proxy server 31 sends a NAPTR DNS query 202 to the DNS 33 responsible for the host name "urie.fr". It is possible that the NAPTR DNS query 202 comprises the domain "urie.fr" of the initial SIP URI or the entire initial SIP URI "sip:alistair@urie.fr". In the present example, the DNS server 33 responsible for "urie.fr" will be populated with the following NAPTR record:

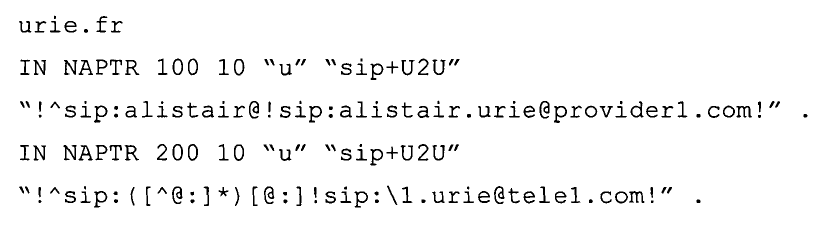

The DNS client, i.e., the proxy server 31, retrieves this record in a query response 203 from the DNS server 33 and applies the rules. But it is also possible that the rules are applied by the DNS server 33 itself and that the result of the application is re-sent in a response message 203 to the proxy server 31. The above rules translate the initial, i.e., the original SIP URI 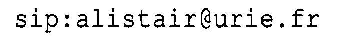 to the new SIP URI 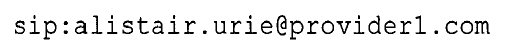 If there are also other members of a family with the last name "Urie", all the other members of the family are translated into 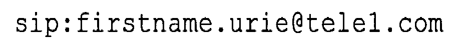 The order values (100, 200) of the NAPTR record make sure that the first rule is applied first. If it does not match, the second rule is applied and so on. The result of the NAPTR is a SIP URI to be put instead of the initial SIP URI of the SIP request 201.

The proxy server 31 routes the call request 204 based on the ported SIP URI obtained from the application of the NAPTR rules to the UAS 20. The routing of the call request 204 may proceed in a multi-step manner. The SIP request 204 may traverse one or more additional proxies 32 on its way to the UAS 20. Each traversed proxy 31, 32 will make routing decisions, modifying the SIP request before forwarding it to the next network element. What follows after routing the SIP request 204 to the UAS 20 are the usual operational steps to establish a session, like the messages OK, ACK for initiating a VoIP session.

If the NAPTR DNS query 202 associated with a SIP URI yields no result, the SIP URI is considered as not ported.

In a preferred embodiment, a tag "porting tested" is put in the SIP request 204, besides the SIP URI, to tell further proxies down the signalling path taken by the SIP request 204 that a check of SIP URI portability, and possible replacement of a SIP URI, has been already carried out.

Likewise, when an issuer 10 of a SIP request, e.g., a SIP UAC being an application server, knows that the target of the SIP request 201 is a SIP URI not being ported, the UAC 10 generates a SIP URI with "porting tested" flag.

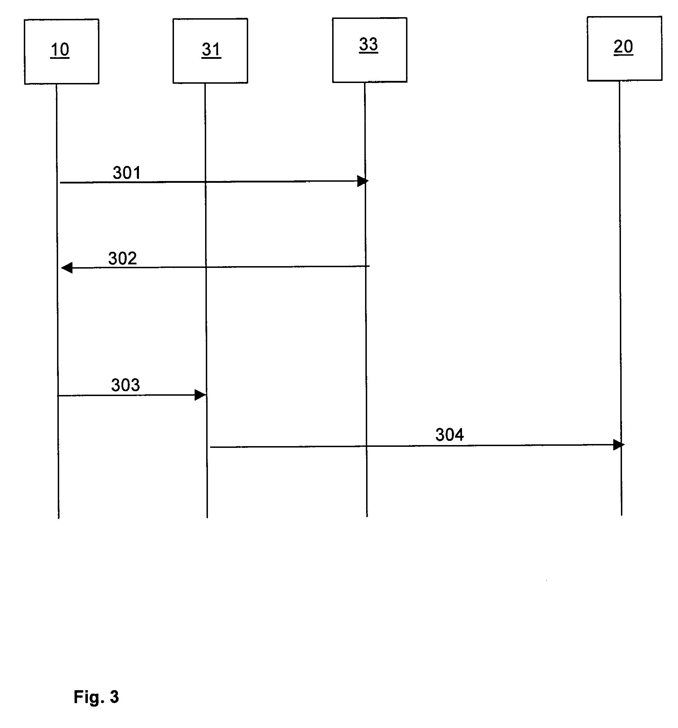

Figure 3 relates to another embodiment of the method according to the invention. Fig. 3 shows the operational steps which are carried out to provide a communication service according to this other embodiment. In analogy to Fig. 2, Fig. 3 shows the UAC 10, the UAS 20, a SIP server 31, and a DNS server 33 in accordance with Fig. 1.

The difference with respect to the operational steps described in Fig. 2 is that the UAC 10 sends a NAPTR DNS query 301 directly to the DNS server 33 before sending a SIP request to the SIP proxy 33. The calling user 100 using the telecommunication terminal 1 with the UAC 10 may input into the telecommunication terminal 1, e.g., via a keyboard, the SIP URI of the called user 200. The UAC 10 may be adapted, when receiving a SIP URI, to recognise the input of a SIP URI as a SIP request from the calling user 100. The UAC 10 may be adapted to send, when triggered by a SIP URI request, automatically a NAPTR DNS query 301 to the DNS 33 (all-call-query). In analogy to the embodiment described with reference to Fig. 2, the sending of the SIP request to the DNS 33 may have been triggered also by a routing failure (query-on-release).

The proper DNS 33 may have been determined by a DDDS application as given above. By means of said application, the host name "urie.fr" is extracted. This helps to identify the DNS 33 responsible for the host name "urie.fr".

The DNS server 33 for "urie.fr" will be populated with the NAPTR record as described above with reference to Fig. 2. The DNS client, i.e., the UAC 10, retrieves this record in a query response 302 and applies the rules. Said rules translate the initial SIP URI to the current SIP URI. For details we refer to the description given above with reference to Fig. 2.

After that, the UAC 10 sends the call request 303 addressed to the ported SIP URI obtained from the application of the NAPTR rules to the UAS 20. The routing of the call request 303 may proceed in a multi-step manner. The SIP request 303 may traverse one or more proxies 31, 32 on its way to the UAS 20. Each traversed proxy 31, 32 will make routing decisions, modifying the SIP request before forwarding it to the next network element. Exemplarily for the routing path, Fig. 3 shows that the initial SIP request 303 from the UAC 10 reaches the SIP proxy 31, and that the SIP proxy 31 routes the SIP request 304 to the UAS 20. What follows after routing the SIP request 304 to the UAS 20 are the usual operational steps to establish a session, like the messages OK, ACK for initiating a VoIP session.

## Claims

1. A method of resolving a session initiation protocol uniform resource identifier by invoking a session initiation protocol server or a session initiation protocol user agent of a telecommunication network,
**characterised in**
**that** the method comprises the steps of:
receiving at the session initiation protocol server or the session initiation protocol user agent a session initiation protocol request addressed to an initial session initiation protocol uniform resource identifier;
invoking a dynamic delegation discovery server to resolve the initial session initiation protocol uniform resource identifier;
executing a dynamic delegation discovery server application defined for the initial session initiation protocol uniform resource identifier;
retrieving a NAPTR resource record of the dynamic delegation discovery server associated with the initial session initiation protocol uniform resource identifier;
applying rules of said NAPTR resource record to the initial session initiation protocol uniform resource identifier and obtaining a ported session initiation protocol uniform resource identifier to be put instead of the initial session initiation protocol uniform resource identifier of the session initiation protocol request; and
substituting the initial session initiation protocol uniform resource identifier of the session initiation protocol request by the ported session initiation protocol uniform resource identifier.

2. The method of claim 1,
**characterised in**
**that** the method comprises the step of:
invoking the dynamic delegation discovery server for resolving the session initiation protocol uniform resource identifier when the session initiation protocol server or the session initiation protocol user agent is not able to resolve it.

3. The method of claim 1,
**characterised in**
**that** the ported session initiation protocol uniform resource identifier corresponds to the initial session initiation protocol uniform resource identifier ported to another provider.

4. The method of claim 1,
**characterised in**
**that** the initial session initiation protocol uniform resource identifier is a personal session initiation protocol uniform resource identifier and the ported session initiation protocol uniform resource identifier is a session initiation protocol uniform resource identifier assigned to the owner of the personal session initiation protocol uniform resource identifier by a service provider.

5. The method of claim 1,
**characterised in**
**that** the method comprises the further step of:
adding a tag to a session initiation protocol request when the dynamic delegation discovery server has been invoked for resolving the initial session initiation protocol uniform resource identifier, the tag indicating to other elements of the telecommunication network that the session initiation protocol uniform resource identifier of the session initiation protocol request has been ported-tested.

6. The method of claim 1,
**characterised in**
**that** the method comprises the further step of:
adding a tag to a session initiation protocol request when the initiator of the session initiation protocol request knows that the initial session initiation protocol uniform resource identifier is not ported, the tag indicating that the session initiation protocol uniform resource identifier of the session initiation protocol request needs not be tested for being ported.

7. A session initiation protocol server,
**characterised in**
**that** the session initiation protocol server comprises a control unit adapted for receiving a session initiation protocol request addressed to an initial session initiation protocol uniform resource identifier; invoking a dynamic delegation discovery server to resolve the initial session initiation protocol uniform resource identifier; retrieving a NAPTR resource record of the dynamic delegation discovery server associated with the initial session initiation protocol uniform resource identifier; applying rules of said NAPTR resource record to the initial session initiation protocol uniform resource identifier and obtaining a ported session initiation protocol uniform resource identifier to be put instead of the initial session initiation protocol uniform resource identifier of the session initiation protocol request; and substituting the initial session initiation protocol uniform resource identifier of the session initiation protocol request by the ported session initiation protocol uniform resource identifier.

8. A terminal with a control unit providing a session initiation protocol user agent functionality,
**characterised in**
**that** the control unit is adapted for receiving a session initiation protocol request addressed to an initial session initiation protocol uniform resource identifier; invoking a dynamic delegation discovery server to resolve the initial session initiation protocol uniform resource identifier; retrieving a NAPTR resource record of the dynamic delegation discovery server associated with the initial session initiation protocol uniform resource identifier; applying rules of said NAPTR resource record to the initial session initiation protocol uniform resource identifier and obtaining a ported session initiation protocol uniform resource identifier to be put instead of the initial session initiation protocol uniform resource identifier of the session initiation protocol request; and substituting the initial session initiation protocol uniform resource identifier of the session initiation protocol request by the ported session initiation protocol uniform resource identifier.

9. A dynamic delegation discovery server,
**characterised in**
**that** the dynamic delegation discovery server comprises a control unit adapted for receiving an invocation to resolve an initial session initiation protocol uniform resource identifier from a session initiation protocol server or a session initiation protocol user agent; executing a dynamic delegation discovery server application defined for the initial session initiation protocol uniform resource identifier; retrieving a NAPTR resource record of the dynamic delegation discovery server associated with the initial session initiation protocol uniform resource identifier; applying rules of said NAPTR resource record to the initial session initiation protocol uniform resource identifier and obtaining a ported session initiation protocol uniform resource identifier to be put instead of the initial session initiation protocol uniform resource identifier of the session initiation protocol request; and transferring the ported session initiation protocol uniform resource identifier to the session initiation protocol server or the session initiation protocol user agent for substitution of the initial session initiation protocol uniform resource identifier of the session initiation protocol request by the ported session initiation protocol uniform resource identifier.

10. The dynamic delegation discovery server of claim 9,
**characterised in**
**that** the data base which is accessed by the dynamic delegation discovery server is regularly updated.
